(19) Europäisches Patentamt
European Patent Office
Office européen des brevets

(11) **EP 1 467 185 B1**

(12) **EUROPÄISCHE PATENTSCHRIFT**

(45) Veröffentlichungstag und Bekanntmachung des Hinweises auf die Patenterteilung:
**07.10.2015 Patentblatt 2015/41**

(51) Int Cl.:
*G01D 5/347* *(2006.01)*    *G02B 3/00* *(2006.01)*

(21) Anmeldenummer: **04006521.1**

(22) Anmeldetag: **18.03.2004**

(54) **Linsenanordnung für einen optischen Encoder**

Lens assembly for an optical encoder

Ensemble lentille pour un codeur optique

(84) Benannte Vertragsstaaten:
**AT BE BG CH CY CZ DE DK EE ES FI FR GB GR HU IE IT LI LU MC NL PL PT RO SE SI SK TR**

(30) Priorität: **11.04.2003 DE 10317736**

(43) Veröffentlichungstag der Anmeldung:
**13.10.2004 Patentblatt 2004/42**

(73) Patentinhaber: **Dr. Johannes Heidenhain GmbH 83292 Traunreut (DE)**

(72) Erfinder:
- **Holzapfel, Wolfgang 83119 Obing (DE)**
- **Benner, Ulrich 83308 Trostberg (DE)**
- **Mayer, Elmar 83365 Nussdorf (DE)**

(56) Entgegenhaltungen:
EP-A- 0 470 420     WO-A-02/084223
DE-A- 19 755 565     US-A1- 2001 024 327
US-B1- 6 437 345

**Beschreibung**

Die Erfindung betrifft eine Abtasteinheit für eine Positionsmesseinrichtung zum optischen Abtasten einer Maßverkörperung nach dem Oberbegriff des Patentanspruchs 1.

Eine derartige Abtasteinheit umfasst eine Lichtquelle zum Aussenden von Licht in Richtung auf die mit einer optisch abtastbaren Spur versehene Maßverkörperung; einen Detektor zum Empfangen des durch die Maßverkörperung modifizierten, z.B. reflektierten, Lichtes; sowie eine vor dem Detektor angeordnete, eine Mehrzahl optischer Linsen aufweisende Linsenanordnung zur Erzeugung eines definierten Abbildes eines mittels des Lichtes abgetasteten Bereiches der Maßverkörperung auf dem Detektor.

Eine solche Abtasteinheit kann zum Abtasten einer mit einer Codespur versehenen Maßverkörperung im Auflicht- oder im Durchlichtverfahren vorgesehen sein. Im erstgenannten Fall wird das von der Lichtquelle in Richtung auf die Maßverkörperung ausgesandte Licht durch die Maßverkörperung modifiziert und reflektiert; im zweitgenannten Fall tritt das von der Lichtquelle ausgesandte Licht durch die (lichtdurchlässige) Maßverkörperung hindurch und wird dabei modifiziert.

Aus der EP 1 009 936 A1 ist eine Positionsmesseinrichtung bekannt, bei der eine Messteilung mittels einer Lichtquelle und eines Detektors in Form einer CCD-Zeile abtastbar ist. Dabei ist zwischen der auf einer Maßverkörperung vorgesehenen Messteilung und dem Detektor eine Mehrzahl in einer Ebene nebeneinander angeordneter Linsen vorgesehen, über die die auf der Maßverkörperung angeordnete Messteilung auf den Detektor abgebildet wird.

Die WO 02/084223 A1 offenbart in Figur 6 eine optische Positionsmesseinrichtung, bei der ein Mikrolinsenarray im Abtaststrahlengang angeordnet ist. Über dieses wird ein Teil des abgetasteten Maßstabs auf einen Detektor abgebildet. Details zur Ausgestaltung des Mikrolinsenarrays finden sich in dieser Druckschrift nicht. Der Erfindung liegt das Problem zugrunde, eine Abtasteinheit für eine Positionsmesseinrichtung der eingangs genannten Art zu schaffen, die es gestattet, zum Abtasten einer Maßverkörperung im Auflichtverfahren und im Durchlichtverfahren identische Detektoren einzusetzen.

Dieses Problem wird erfindungsgemäß durch die Schaffung einer Abtasteinheit mit den Merkmalen der unabhängigen Patentansprüche 1 bzw. 12 gelöst.

Danach ist der Abbildungsmaßstab der Linsenanordnung, die zur Erzeugung eines definierten Abbildes des abgetasteten Bereiches der Maßverkörperung auf dem Detektor dient, größer als null und kleiner oder gleich zwei.

Durch den positiven Abbildungsmaßstab der Linsenanordnung wird erreicht, dass das auf dem Detektor erzeugte Abbild des abgetasteten Bereiches der Maßverkörperung unabhängig davon, ob die Maßverkörperung im Auflicht- oder im Durchlichtverfahren abgetastet wird, die gleiche räumliche Orientierung aufweist. Hierdurch lässt sich auch bei Codespuren mit absoluter Positionsinformation (z.B. einem PRC Code) ein Detektortyp, der beispielsweise auf einem bestimmten Opto-ASIC basiert, in gleicher Weise in einem Durchlicht- als auch in einem Auflicht-Positionsmessgerät verwenden; denn es wird durch den positiven Abbildungsmaßstab eine korrekte Abbildung und Auswertung einer Codespur der Maßverkörperung gewährleistet.

In einer bevorzugten Ausführungsform ist die Linsenanordnung derart ausgebildet, dass der Abbildungsmaßstab den Wert eins annimmt. Ein Abbildungsmaßstab mit einem Wert größer eins kann jedoch z.B. dazu dienen, sehr kleine Strukturen auf der Maßverkörperung zu vergrößern.

Die Linsenanordnung umfasst eine Mehrzahl in mindestens einer Ebene angeordneter Linsen, die derart ausgerichtet sind, dass das durch die Maßverkörperung modifizierte Licht diese Ebene schneidet. Die Ebene erstreckt sich hierzu einerseits entlang der Messrichtung, entlang der die Abtasteinheit relativ zu der Maßverkörperung bewegbar ist, sowie andererseits senkrecht zu dieser Richtung.

Insbesondere umfasst die Linsenanordnung zwei Gruppen von Linsen, die in jeweils einer von zwei parallel zueinander erstreckten Ebenen angeordnet sind, wobei die Linsen der beiden Gruppen jeweils paarweise zu einer Zelle zusammengefasst sind und die Linsen einer Zelle jeweils senkrecht zu den besagten Ebenen hintereinander angeordnet sind.

Die Anordnung der Linsen zur Bildung von Zellen erfolgt derart, dass zumindest ein Teil der modifizierten Lichtstrahlen, die eine erste Linse einer Zelle passiert haben, anschließend zu der zweiten Linse derselben Zelle gelangen, wobei vorzugsweise im Wesentlichen sämtliche Lichtstrahlen, die die erste Linse einer Zelle passiert haben, anschließend zu der zweiten Linse derselben Zelle und nicht zu einer zweiten Linse einer anderen Zelle gelangen.

Der erfindungsgemäß vorgesehene Abbildungsmaßstab der Linsenanordnung lässt sich insbesondere dadurch erreichen, dass für jede Zelle der Linsenanordnung das Produkt der Abbildungsmaßstäbe der beiden Linsen kleiner oder gleich eins, insbesondere gleich eins, ist. Hierbei ist vorzugsweise für jede Zelle der Betrag des Abbildungsmaßstabes der ersten Linse kleiner dem Betrag des Abbildungsmaßstabes der zweiten Linse, zu der das Licht gelangt, nachdem es die erste Linse passiert hat. Dies bedeutet, dass das von der ersten Linse der jeweiligen Zelle erzeugte Zwischenbild eine kleinere Ausdehnung aufweist als das von den beiden Linsen der Zelle schließlich auf dem Detektor erzeugte Abbild des abgetasteten Bereiches der Maßverkörperung.

Indem der Betrag des Abbildungsmaßstabes der ersten Linse der jeweiligen Zelle um soviel kleiner gewählt wird, als der Betrag des Abbildungsmaßstabes der zweiten Linse, dass die Lichtstrahlen eines Lichtbündels, welches die erste Linse einer Zelle passiert hat, nicht zu einer zweiten Linse einer anderen Zelle gelangen, lässt sich ohne Verwendung einer Blendenstruktur ein Übersprechen zwischen benachbarten Zellen verhindern. Hierzu können insbesondere die Brennweiten der Linsen der ersten Gruppe und der zweiten Gruppe der Linsenanordnung unterschiedlich gewählt sein, wobei die Brennweite der Linsen, die das durch die Maßverkörperung modifizierte Licht zuerst passiert, größer ist als die Brennweite der anderen, zweiten Linsen der Zellen.

Andererseits kann eine Blendenstruktur vorgesehen sein, um ein Übersprechen zwischen benachbarten Zellen zu vermeiden. Diese Blendenstruktur kann beispielsweise in der Ebene derjenigen Gruppe von Linsen angeordnet sein, die das durch die Maßverkörperung modifizierte Licht zuerst passiert. Alternativ kann die Blendenstruktur auch zwischen den beiden Gruppen von Linsen angeordnet sein. Hierbei kann jeder Zelle eine separate Blende der Blendenstruktur zugeordnet sein.

Die einzelnen Linsen der Linsenanordnung sind vorzugsweise zylinderartig gewölbt und können in der Draufsicht beispielsweise rechteckförmig, elliptisch oder radial symmetrisch ausgebildet sein.

Zur Bildung der einzelnen Linsen eignen sich sowohl diffraktive als auch refraktive optische Elemente.

Ferner kann vorgesehen sein, dass die Linsen der Linsenanordnung nur eine teilfokussierende optische Wirkung aufweisen, z.B. nur entlang der Messrichtung der jeweiligen Positionsmesseinrichtung.

Das von der Lichtquelle erzeugte und durch die Maßverkörperung modifizierte Licht kann vor dem Erreichen der Maßverkörperung oder nach der Modifikation durch die Maßverkörperung mittels mindestens einer hierfür vorgesehenen, vor oder hinter der Maßverkörperung angeordneten Linse (Kondensorlinse) parallelisiert werden. Es ist jedoch auch möglich, eine Abtasteinheit mit divergentem Licht zu betreiben.

Eine Positionsmesseinrichtung mit einer erfindungsgemäßen Abtasteinheit und mit einer hierdurch abzutastenden Maßverkörperung, die mindestens eine optisch abtastbare Spur aufweist, ist durch die Merkmale des Patentanspruchs 14 charakterisiert.

Bei der optisch abtastbaren Spur der Maßverkörperung kann es sich einerseits um eine absolut codierte Spur handeln, die mit einem geeigneten linearen Zeilensensor abgetastet wird, oder um eine Inkrementalspur, der wiederum ein geeigneter, bekannter Detektor zugeordnet ist. Sind auf der Maßverkörperung sowohl eine Codespur als auch eine Inkrementalspur vorgesehen, so umfasst der Detektor dementsprechend einerseits Detektorbereiche, die zur Abtastung einer Codespur geeignet sind, und andererseits Detektorbereiche, die zur Abtastung einer Inkrementalspur geeignet sind.

Weitere Merkmale und Vorteile der Erfindung werden bei der nachfolgenden Beschreibung von Ausführungsbeispielen anhand der Figuren deutlich werden.

Es zeigen:

Figur 1     eine Positionsmesseinrichtung mit einer Abtasteinheit zum Abtasten einer Maßverkörperung im Auflichtverfahren, wobei zwischen der Maßverkörperung und einem Detektor der Positionsmesseinrichtung eine Linsenanordnung vorgesehen ist;

Figur 2     einen Schnitt durch einen Ausschnitt der Linsenanordnung aus Fig. 1;

Figur 3     eine Abwandlung der Linsenanordnung gemäß Figur 2;

Figur 4     eine weitere Abwandlung der Linsenanordnung aus Figur 2;

Figur 5     eine Draufsicht auf eine Ebene der Linsenanordnung aus Figur 1.

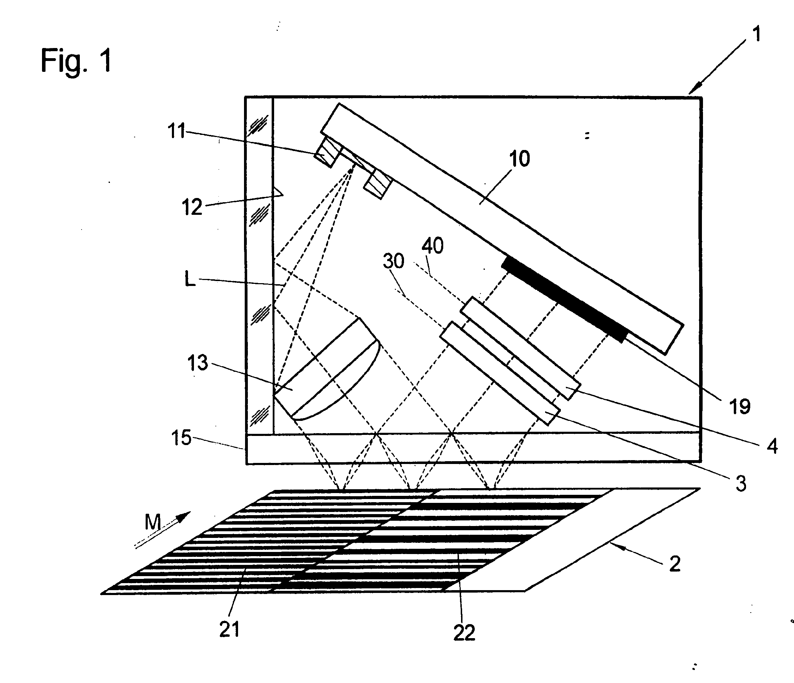

Figur 1 zeigt ein Positionsmesssystem für eine Längenmessung entlang einer Messrichtung M mit einer Maßverkörperung 2 und einer entlang der Messrichtung M relativ zu der Maßverkörperung 2 bewegbaren Abtasteinheit 1 zum Abtasten der Maßverkörperung 2.

Die Maßverkörperung 2 weist eine Inkrementalspur 21 in Form einer linearen, periodischen, entlang der Messrichtung M erstreckten Strichteilung sowie eine neben der Inkrementalspur 21 angeordnete, ebenfalls entlang der Messrichtung M erstreckte Codespur 22 mit absoluter Positionsinformation (z.B. einen PRC-Code) auf. Durch Abtastung der Inkrementalspur 21 mittels der Abtasteinheit 1 bei einer Bewegung der Abtasteinheit 1 relativ zu der Maßverkörperung 2 in Messrichtung M kann das Ausmaß der Bewegung der Abtasteinheit 1 relativ zu der Maßverkörperung 2 (Relativbewegung) ermittelt werden. Die Codespur 22 ermöglicht demgegenüber die Bestimmung der jeweiligen absoluten Position der Abtasteinheit 1 relativ zu der Maßverkörperung 2.

Die zum Abtasten der Maßverkörperung 2 dienende opto-elektronische Abtasteinheit 1 weist eine Leiterplatte 10 auf, auf der eine Lichtquelle 11 in Form einer lichtemittierenden Diode sowie im Abstand zur Lichtquelle 11 ein fotoelektrischer Detektor 19 angeordnet ist, der abwechselnd strahlungsempfindliche Bereiche und strahlungsunempfindliche Lücken aufweist, deren Ausrichtung der Ausrichtung der jeweiligen, zugeordneten Messteilung 21, 22 angepasst ist. Der fotoelektrische Detektor 19 kann beispielsweise entsprechend dem aus der DE 100 22 619 A1 bekannten strukturierten optoelektronischen Fotodetektor ausgebildet sein.

Die Leiterplatte 10 mit der Lichtquelle 11 und dem fotoelektrischen Detektor 19 ist in einem Abtastgehäuse angeordnet, dessen der Lichtquelle 11 zugewandte Seitenwand 12 als Reflexionsfläche verspiegelt ausgebildet ist und die von der Lichtquelle 11 ausgesandten Lichtstrahlen L zu einer Kondensorlinse 13 reflektiert, von der die Lichtstrahlen 11 dann als parallelisiertes Lichtbündel durch eine die Bodenfläche des Abtastgehäuses bildende Glasplatte 15 zu der Maßverkörperung 2 geführt werden.

Die Glasplatte 15 weist oberhalb der Inkrementalspur 21 ein Abtastgitter mit einer Gitterstruktur auf, die geringfügig von der Gitterkonstanten der Inkrementalspur 21 der Maßverkörperung 2 abweicht, so dass aus der Wechselwirkung der beiden Gitterstrukturen ein virtuelles Streifenmuster - beispielsweise ein sogenanntes Vernier-Streifenmuster - in einer Zwischenebene erzeugt wird, welches dann über eine Linsenoptik 3, 4 auf den Detektor 19 abgebildet wird. Oberhalb der Codespur 22 ist die Glasplatte 15 demgegenüber nicht strukturiert.

Gemäß Figur 1 ist das Positionsmesssystem als ein im Auflichtverfahren arbeitendes System ausgebildet, so dass das von der Lichtquelle 11 ausgesandte und mittels der Kondensorlinse 13 parallelisierte Licht nach dem Passieren der Glasplatte 15 von der Maßverkörperung 2 reflektiert wird, wobei durch das Zusammenwirken der Inkrementalspur 21 der Maßverkörperung 2 und der Gitterstruktur der Glasplatte 15 ein definiertes Streifenmuster erzeugt wird bzw. durch Modifikation der Lichtstrahlen mittels der Codespur 22 ein charakteristisches Abbild des PRC-Code der Codespur 22 erzeugbar ist. Alternativ kann die Kondensorlinse auch zwischen der Maßverkörperung und der Linsenanordnung angeordnet sein.

Im folgenden wird insbesondere die Erzeugung eines korrekten Abbildes der Codespur 22 auf dem Detektor 19 näher erläutert werden, da hierfür die erfindungsgemäße Ausbildung der Linsenanordnung 3, 4 mit einem positiven Abbildungsmaßstab von besonderer Bedeutung ist.

Das reflektierte Licht gelangt zu der Linsenanordnung 3, 4, die durch zwei Gruppen von Linsen gebildet wird, welche in jeweils einer von zwei parallel zueinander verlaufenden Ebenen 30, 40 angeordnet sind. Jede der beiden Linsengruppen 3 bzw. 4 besteht aus einer Mehrzahl in der jeweiligen Ebene 30 bzw. 40 nebeneinander angeordneter Linsen (sogenanntes Mikrolinsen-Array). Die Ebenen 30, 40, in denen die beiden Linsengruppen 3, 4 der Linsenanordnung sich erstrecken, sind derart angeordnet, dass sie von den an der Maßverkörperung 2 reflektierten Lichtstrahlen L im Wesentlichen senkrecht geschnitten werden. Alternativ könnten die beiden Ebenen im Gehäuse Abtasteinheit jedoch auch parallel zu der Maßverkörperung angeordnet sein.

Bei einem derartigen doppelten Linsen-Array, das aus zwei in einem definierten Abstand voneinander und parallel zueinander angeordneten Linsengruppen besteht, kann jeder Einzellinse der ersten Linsengruppe 3 genau eine Einzellinse der zweiten Gruppe 4 zugeordnet werden. Dadurch lässt sich mit Linsen ohne Wellenleiterstruktur ein positiver Abbildungsmaßstab, d.h. ein Abbildungsmaßstab mit einem Wert größer als null, insbesondere dem Wert eins, realisieren. Ein solcher Abbildungsmaßstab ermöglicht es wiederum, die Bildbereiche der Einzellinsen mit einer definierten räumlichen Orientierung kontinuierlich aneinander anzuschließen. Die Verwendung einer Linsenanordnung mit zwei entlang der optischen Achse voneinander beabstandeten Linsengruppen 3, 4 ermöglicht eine großflächige Abtastung der Maßverkörperung 2 bei gleichzeitig geringer Bauhöhe und somit kompakter Ausbildung des Positionsmesssystems.

Besonders vorteilhaft ist hierbei eine derartige Ausbildung der Linsenanordnung, dass der Abbildungsmaßstab den Wert 1 annimmt. Indem für beide Linsengruppen 3, 4 das gleiche Raster, d.h. eine übereinstimmende Anordnung der Einzellinsen in der jeweiligen Ebene 30, 40, verwendet wird, gehen die (entsprechend gerasterten) Bildbereiche des von der Linsenanordnung 3, 4 auf dem Detektor 19 erzeugten Abbildes unmittelbar kontinuierlich ineinander über. Es bestehen also in der gesamten Linsenanordnung 3, 4 einheitliche Abbildungsverhältnisse.

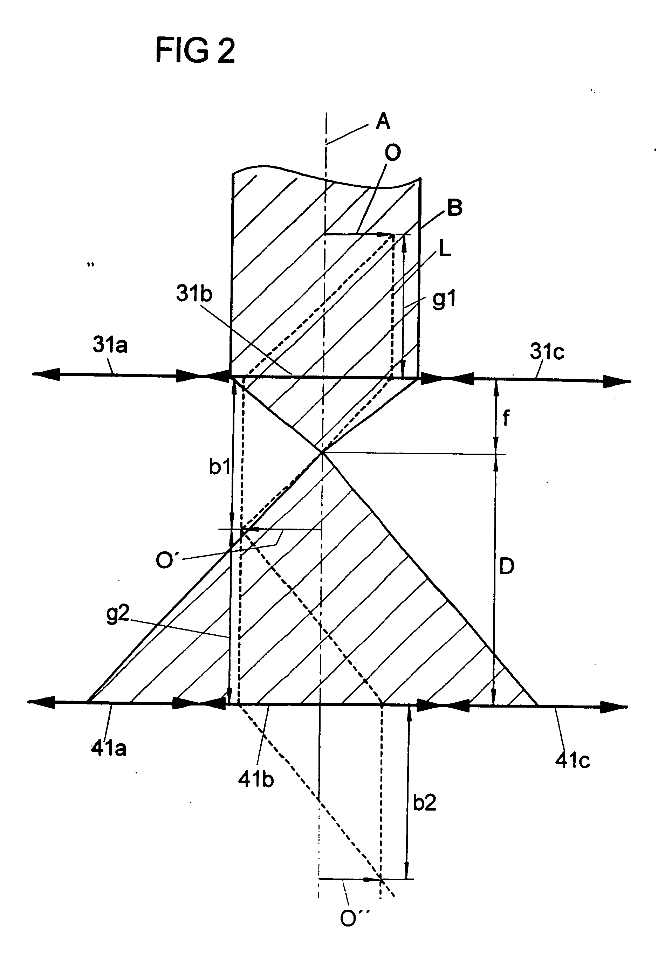

Figur 2 zeigt einen Ausschnitt eines Querschnittes durch die Linsenanordnung 3, 4 aus Figur 1, der insgesamt drei Zellen 31a, 41a; 31b, 41b; 31c, 41c der Linsenanordnung umfasst. Unter einer Zelle 31a, 41a; 31b, 41b; 31c, 41c der Linsenanordnung 3, 4 werden dabei jeweils zwei hintereinander angeordnete Einzellinsen 31 a, 41 a bzw. 31 b, 41 b bzw. 31c, 41 c der Linsenanordnung 3, 4 verstanden, wobei von den beiden Linsen einer Zelle jeweils die eine aus der ersten Linsengruppe 3 und die andere aus der zweiten Linsengruppe 4 der Linsenanordnung 3, 4 stammt.

In dem in Figur 2 beispielhaft dargestellten Ausschnitt der Linsenanordnung 3, 4 ist eine zentrale Zelle 31b, 41b erkennbar, die eine Linse 31b aus der ersten Linsengruppe 3 und eine Linse 41b aus der zweiten Linsengruppe 4 umfasst, sowie zwei beidseits der zentralen Linsengruppe 31b, 41b angeordnete weitere Linsengruppen 31a, 41a und 31c, 41c. Die Funktion der in Zellen unterteilten Linsenanordnung 3, 4 wird nachfolgend insbesondere anhand der zentralen Zelle 31 b, 41 b aus Figur 2 näher erläutert werden.

Die zentrale Zelle 31b, 41b umfasst eine erste Einzellinse 31b, die einen Bestandteil der ersten Linsengruppe 3 (vgl. Figur 1) bildet und in der entsprechenden Ebene 30 angeordnet ist, sowie eine zweite Einzellinse 41b, die entlang der optischen Achse A hinter der ersten Einzellinse 31b der Zelle angeordnet ist und die als Bestandteil der zweiten Linsengruppe 4 in der entsprechenden parallelen Ebene 40 liegt. In gleicher Weise sind die Einzellinsen der weiteren Zellen 31 a, 41 a; 31c, 41 c entlang der optischen Achse A der Linsenanordnung 3, 4 jeweils hintereinander angeordnet. Insgesamt bilden die ersten Linsen 31a, 31b, 31c der Zellen jeweils einen Bestandteil der ersten Linsengruppe 3 und die zweiten Linsen 41a, 41b, 41c der jeweiligen Zelle einen Bestandteil der zweiten Linsengruppe 4 der Linsenanordnung 3, 4.

Figur 2 zeigt schematisch ein durch die Maßverkörperung 2 (vgl. Figur 1) reflektiertes, parallelisiertes Bündel B, das im Wesentlichen entlang der optischen Achse A der Linsenanordnung 3, 4 erstreckt ist und welches bei der Reflexion an der Maßverkörperung 2 durch den Code der Codespur 22 modifiziert wird, von dem in Figur 2 beispielhaft ein Bestandteil als Objekt O angedeutet ist.

Die Codespur 22 wird mittels der Linsenanordnung 3, 4 auf den Detektor 19 der Abtasteinheit 1 (vgl. Figur 1) abgebildet, wie nachfolgend beispielhaft anhand des Objektes O und einer Zelle 31 b, 41 b der Linsenanordnung 3, 4 erläutert. Hierzu sind einzelne Lichtstrahlen L des parallelisierten Lichtbündels B separat dargestellt.

Von dem die Codespur repräsentierenden Objekt 0 wird mittels der ersten Linse 31b der entsprechenden Zelle 31b , 41b ein Zwischenbild O' erzeugt, aus dem dann mittels der zweiten Linse 41b der Zelle 31b, 41b das auszuwertende Abbild O" auf dem Detektor 19 (vgl. Figur 1) erzeugt wird. Da der Abbildungsmaßstab β der Linsenanordnung 3, 4 und vorliegend insbesondere auch jeder einzelnen Zelle gleich eins ist, weist das Abbild O" die gleiche räumliche Orientierung und die gleiche Größe auf wie das die Codespur repräsentierende Objekt O Insofern kann mit der anhand der Figuren 1 und beschriebenen Linsenanordnung ein Abbild der Codespur erzeugt werden, das dem bei Abtastung einer Maßverkörperung im Durchlichtverfahren erzeugten Abbild entspricht. Dies gestattet die Verwendung eines einheitlichen Detektortyps sowohl bei im Durchlichtverfahren als auch bei im Auflichtverfahren abtastenden Positionsmesseinrichtungen.

Nachfolgend seien nochmals einige wichtige Eigenschaften und Vorteile der in Figur 2 gezeigten Anordnung zusammengefasst.

Ein wichtiger Vorteil des Abbildungsmaßstabes β = 1 zeigt sich bei Betrachtung der Änderung der Bildweite b2 der zweiten Linse 41 b der Zelle bezogen auf eine Änderung der Gegenstandsweite g1 der ersten Linse 31b der Zelle 31b, 41b:

$$b2/g1 = -\beta^2 = -1.$$

Aus dieser Relation ergibt sich, dass eine kleine Verschiebung der beiden Linsengruppen 3, 4 relativ zu einem fixierten Objekt O und dem zugehörigen Bild Q" noch eine scharfe Abbildung ermöglicht. Daher können entsprechend große Toleranzen bei der Montage der Linsenanordnung 3, 4 in Kauf genommen werden.

Um die vorbeschriebene, vorteilhafte 1:1-Abbildung eines ausgedehnten Bereiches eines Objektes, nämlich einer Codespur, mittels der Linsenanordnung 3, 4 zu erreichen, wobei der abzubildende Bereich deutlich größer als die Ausdehnung der Einzellinsen der Linsenanordnung sein soll, muss für das Produkt der Abbildungsmaßstäbe β1 und β2 der ersten Linse 31 b und der zweiten Linse 41 b der jeweiligen Zelle 31 b, 41 b gelten,

$$\beta1 * \beta2 = 1,$$

wobei β1 und β2 jeweils negativ sind. β1 und β2 sind so zu wählen, dass optimale Eigenschaften hinsichtlich der Abbildungsqualität erreicht werden.

Nachfolgend wird zunächst davon ausgegangen, dass die Linsen der beiden Linsengruppen 3, 4 jeweils eine identische Brennweite f aufweisen und dass die von einer jeweiligen Zelle (z.B. 31b, 41b) der Linsenanordnung 3, 4 erzeugte erste (zu dem Zwischenbild O' führende) Abbildung den Abbildungsmaßstab β1 und die zweite Abbildung den Abbildungsmaßstab β2 habe, wobei nachfolgend außerdem g1 und b1 die Gegenstandsweite und Bildweite der ersten Abbildung sowie g2 und b2 die Gegenstandsweite und Bildweite der (zu dem Abbild O" führenden) zweiten Abbildung bezeichnen und D die Differenz zwischen dem Abstand der beiden Linsen 31b, 41b einer Zelle und der Brennweite f angibt. Es gilt dann:

$$f + D = b1 + g2$$
$$= f (1 + |\beta1|) + f (1 + 1/|\beta2|),$$

wobei die Umformung unter Verwendung der Abbildungsgleichungen für b1 und g2 erfolgte.

Wegen β1 * β2 = 1 ergibt sich daraus

$$D = f \ * \ (1 + 2 \ * \ |\beta 1|).$$

In Figur 2 ist der entsprechende Verlauf des der zentralen Zelle 31b, 41b zugeordneten Lichtbündels B bei kollimierter Beleuchtung schraffiert dargestellt. Das der zentralen Zelle 31 b, 41 b zugeordnete Lichtbündel B umfasst dabei alle diejenigen Lichtstrahlen L, die die erste Linse 31b dieser Zelle 31b, 41b passieren. Anhand Figur 2 ist erkennbar, dass das Licht des Bündels B im Brennpunkt f der ersten Linse 31b gesammelt wird und danach divergent auseinanderläuft. Hierdurch gelangt nicht das gesamte Licht des Bündels B zu der zweiten Linse 41b der entsprechenden Zelle 31b, 41b, sondern vielmehr auch auf die zweiten Linsen 41a, 41c weiterer Zellen 31a, 41a bzw. 31c, 41c. Dieses Übersprechen stört das individuelle Abbildungsverhalten der einzelnen Zellen und entzieht zudem den einzelnen Zellen jeweils Licht. Um dieses Übersprechen zu reduzieren, muss der Differenzwert D zwischen dem Abstand der beiden Linsen 31b, 41b einer Zelle und der Brennweite f minimiert werden; denn dies grenzt das Auseinanderlaufen des hinter dem Brennpunkt f divergierenden Lichtkegels ein. Gemäß der obigen Gleichung wird dies durch eine Minimierung des Abbildungsmaßstabes β1 der ersten Abbildung erreicht.

Besonders vorteilhafte Bedingungen bestehen bei übereinstimmenden Linsenrasterkonstanten in der ersten und zweiten Linsengruppe 3, 4, wenn der Differenzwert D gleich der Brennweite f1 der ersten Linse 31 b der jeweiligen Zelle 31b, 41b ist. Ein entlang der optischen Achse (also senkrecht zu den Ebenen 30, 40 der Linsengruppen 3, 4) auftreffendes, kollimiertes Lichtbündel B wird dann durch die jeweilige Einzellinse 31 b der ersten Linsengruppe 3 genau auf die zugeordnete Einzellinse 41b der zweiten Linsengruppe abgebildet. Ein Übersprechen auf benachbarte Einzellinsen findet nicht statt.

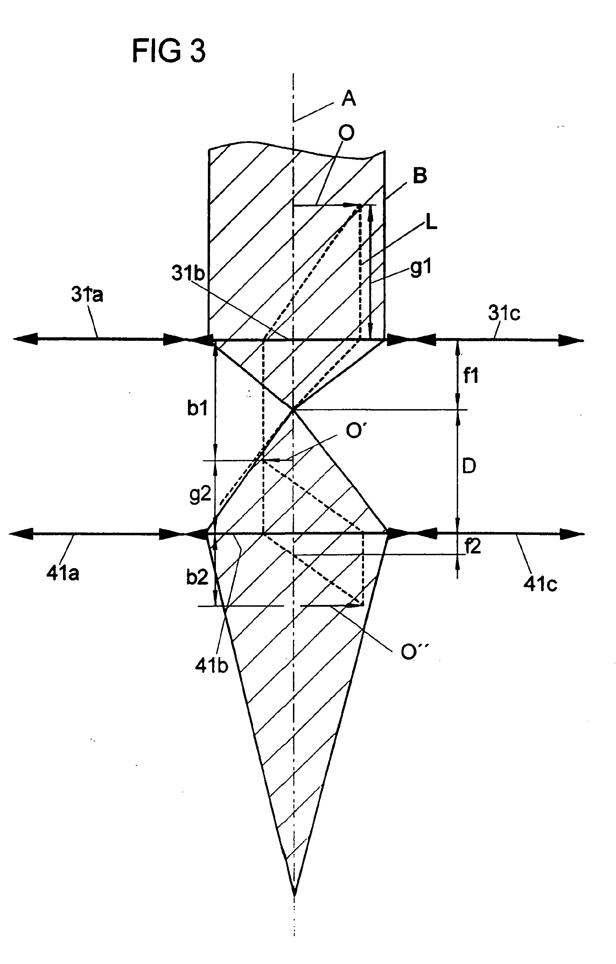

Eine entsprechende Anordnung ist in Figur 3 dargestellt. Für einen Abbildungsmaßstab β = +1 gilt in diesem Fall:

$$g1 = 2 \ * \ f1^2/(f1 - f2),$$

$$b2 = 2 \ * \ f1 \ * \ f2/(f1 - f2),$$

$$\beta 1 = 1/\beta 2 = (f1 - f2)/(f1 + f2)$$

und

$$b2/ \ g1 = f2/f1 < 1.$$

Somit ergibt sich hinsichtlich der Vermeidung des Übersprechens die Regel, dass die Gesamtabbildung mit dem Abbildungsmaßstab β = 1 aufzuteilen ist in eine erste, verkleinernde Abbildung mit dem Abbildungsmaßstab |β1|<< 1 und nachfolgend eine vergrößernde zweite Abbildung mit dem Abbildungsmaßstab |β2| >> 1.

Gemäß Figur 3 lässt sich dabei das Übersprechen insbesondere dann eliminieren, wenn - bei identischer Linsenrasterkonstanten der ersten und zweiten Linsengruppe 3, 4 und unter Berücksichtigung der obigen Regeln für die erste und zweite Abbildung - die Brennweite f2 der zweiten Linse 41 b kleiner gewählt wird als die Brennweite f1 der ersten Linse 31 b, vgl. Figur 3.

Auch hinsichtlich weiterer Einflussgrößen ist es vorteilhaft, die beiden Abbildungen derart zu gestalten, dass zunächst eine Verkleinerung und anschließend eine Vergrößerung stattfindet. So variiert durch Montage- und Betriebstoleranzen die Gegenstandsweite g1 der ersten Abbildung typischerweise in der Größenordnung von 0.1 mm. Da

$$g1 = f1 \ * \ (1 + 1/\beta 1),$$

kann sich das Abbild von reell zu virtuell ändern, weil das abzubildende Objekt in den Fokus des Objektivs gerät, wenn |f1/β1| in die Größenordnung von 0,1 mm liegt. Da für Mikrolinsen, die insbesondere zur Bildung der Linsenanordnung 3, 4 verwendet werden können, die Brennweite in der Größenordnung von 300 $\mu$m bis 800 $\mu$m liegt, muss zur Vermeidung dieses Problems entsprechend der Forderung |f1/β1| » 0,1 mm, erreicht werden, dass |β1| << 3. Dies ist die Bedingung für das Vermeiden eines Umklappens der reellen in virtuelle Bilder.

Grundsätzlich sollte jedoch über die obige Bedingung hinaus |β1| << 1 gewählt werden, wodurch die Relation zwischen der Leseabstandstoleranz und der Gegenstandsweite g1 deutlich verbessert, nämlich gesenkt wird. Eine entsprechend große Gegenstandsweite der ersten Abbildung ist auch dann vorteilhaft, wenn aus Schutzgründen zwischen Objektiv und Maßstab eine Glasplatte angeordnet werden soll.

Nach einer anderen Variante lässt sich Übersprechen zwischen benachbarten Zellen durch Bündelbegrenzung, z.B. mittels einer Blendenanordnung, vermeiden. Ausgangspunkt ist hier die Beobachtung, dass sich bei einer optischen Abbildung eine Variation der Gegenstandsweite mit dem Faktor $\beta^2$ auf die Bildweite und damit Bildgröße auswirkt. Bei einer Abbildung mit dem Abbildungsmaßstab β = 1 würden also Variationen der Gegenstands- bzw. Objektweite in entsprechende Variationen der Bildgröße übersetzt. Dem lässt sich durch Bündelbegrenzung in gewissem Umfang entgegentreten, z.B. durch Verwendung telezentrischer Objektive, wobei der Strahlverlauf vom abzubildenden Objekt zur nachgeordneten Linse möglichst parallel zur optischen Achse ausgerichtet ist. Eine solche Anordnung lässt sich beispielsweise dadurch verwirklichen, dass im bildseitigen Brennpunkt der entsprechenden Linse eine Lochblende angeordnet wird. Die Größe des Loches bestimmt dann die Bündelaufweitung. Allerdings kann das Loch der Lochblende nicht beliebig klein ausgebildet werden. Da die Lochblende eine Apperturblende ist, muss sichergestellt werden, dass das Verhältnis zwischen dem Lochradius und der Brennweite der Linse größer ist als der Sinus des Beugungswinkels erster Ordnung für das abzubildende Objekt.

Hiervon ausgehend gilt Folgendes: Bei einer zunächst verkleinernden Abbildung (|β1| << 1) ist die Gegenstands- bzw. Objektweite viel größer als die Brennweite der ersten Linse. Daher werden die Strahlenbündel in ihrer zulässigen Aufweitung selbst ohne zusätzliche Maßnahmen, also nur durch die Ausdehnung der Linsenöffnung bedingt, so stark limitiert, dass die Erfüllung der vorstehend genannten Bedingungen für den Einfang der ersten Beugungsordnung zu berücksichtigen sind. Es bestehen daher bei der ersten Abbildung ähnliche Bedingungen wie beim telezentrischen Objektiv, so dass durch die Beeinflussung von Bildgröße und -ort als Folge einer Variation des Leseabstandes minimiert sind. Durch derartige "Telezentrie-Eigenschaften" der ersten Abbildung sowie eine exakte Montage kann dann die Objektweite der wegen der Bedingung |β2 » 1| besonders kritischen zweiten Abbildung geeignet eingestellt werden.

Neben einer Begrenzung des Strahlenbündels im Strahlengang zwischen den beiden Linsen 31b, 41b einer Zelle kann ein Übersprechen zwischen den Linsen benachbarter Zellen auch durch eine Modifikation der Appertur der ersten Linse 31b der jeweiligen Zelle 31b, 41b erreicht werden, indem in der Ebene der ersten Linsengruppe 3 zwischen den Linsen entsprechende Blenden angeordnet werden.

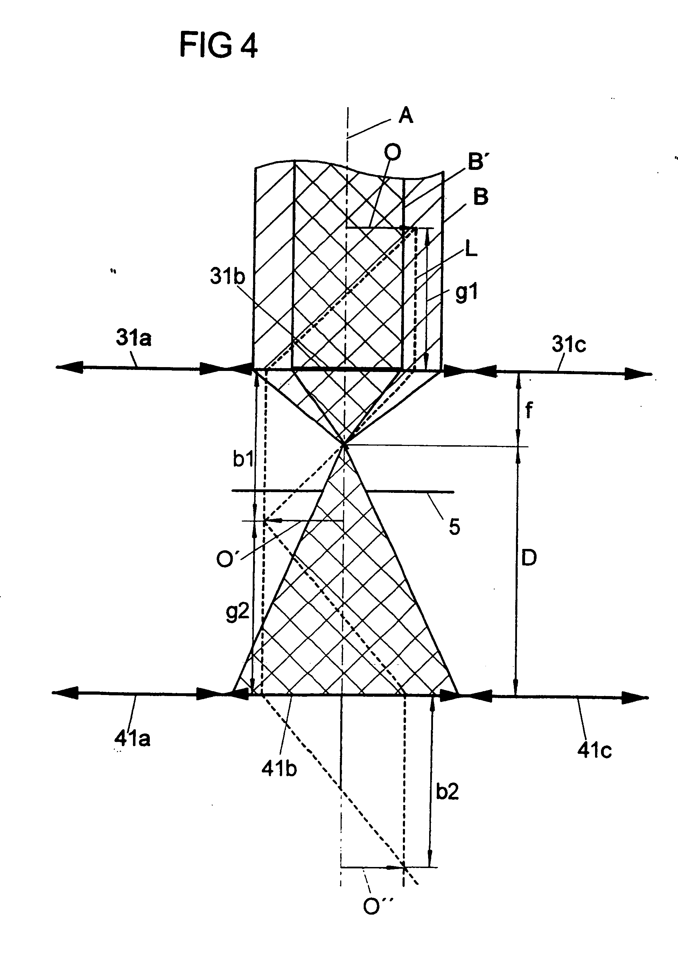

Figur 4 zeigt eine Anordnung gemäß Figur 2, bei der jeder Zelle, z.B. der zentralen Zelle 31 b, 41 b der Linsenanordnung 3, 4, eine Feldblende 5 zugeordnet ist, die, von der ersten Linse 31b der Zelle 31b, 41b her gesehen hinter dem Brennpunkt der ersten Linse 31b liegt und hierdurch das hinter dem Brennpunkt divergierenden Lichtstrahlenbündel B derart begrenzt, dass diejenigen Lichtstrahlen, welche die Blende 5 passieren, ausschließlich zur zweiten Linse 41b der zentralen Zelle 31b, 41b gelangen, nicht jedoch zu den zweiten Linsen 41 a, 41 c benachbarter Zellen 31 a, 41 a; 31 c, 41 c.

Die Begrenzung des Lichtbündels B mittels einer Blende 5 hat bei kollimierter Beleuchtung jedoch zur Folge, dass der Objektbereich reduziert wird, entsprechend dem in Figur 4 zweifach schraffiert dargestellten Ausschnitt des Lichtbündels B, welcher denjenigen Anteil B' des Lichtbündels B repräsentiert, der von der Blende 5 durchgelassen wird.

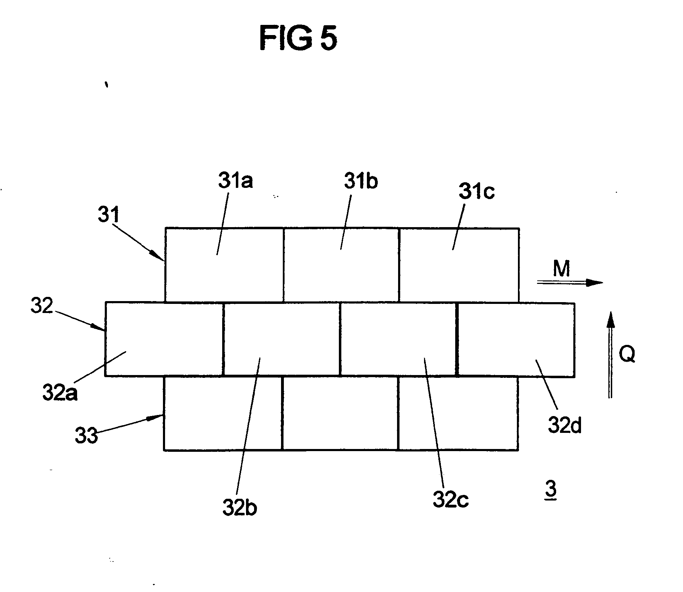

Zur Vermeidung eines mit der Verwendung einer Blendenstruktur gemäß Figur 4 verbundenen Informationsverlustes können gemäß Figur 5 die einzelnen Zeilen 31, 32, 33 einer Linsengruppe 3, die sich jeweils in der Erstreckungsebene der entsprechenden Linsengruppe 3 entlang der Messrichtung M erstrecken und die in einer Richtung Q quer zur Messrichtung nebeneinander angeordnet sind, in Messrichtung M zueinander versetzt seien, so dass eine Linse 31a, 31b, 31c aus einer Zeile 31 jeweils mit mehreren Linsen 32a, 32b; 32b, 32c; 32c, 32d der benachbarten Zeile 32 überlappt. Somit kann durch die jeweils benachbarte Zeile (32) derjenige Teil eines Objektes abgebildet werden, der bei der anderen Zeile (31) ausgeblendet ist. Vorzugsweise sind benachbarte Zeilen 31, 32 der Linsengruppe 3 jeweils um die halbe Ausdehnung der Linsen in Messrichtung M zueinander versetzt.

Alternativ könnte trotz Benutzung einer Blende zur Reduzierung des Übersprechens eine vollständige Übertragung des abzubildenden Objektes (ohne Reduzierung des Objektbereiches) auch durch den Ersatz eines kollimierten Lichtbündels durch divergentes Licht erreicht werden. Ohne eine zusätzliche Telezentrie-Blende hätte dies allerdings einen Verlust an Leseabstandstoleranz und mit zusätzlicher Telezentrie-Blende einen Verlust an übertragener Leistung zur Folge.

In diesem Zusammenhang sei noch auf einen weiteren Vorteil hinsichtlich der Stabilisierung der Code-Identifizierung bei der Verwendung von Linsengruppen 3, 4 in Form von Linsenarrays (d.h. großflächig in einer Ebene erstreckte Linsengruppen) hingewiesen. Dies betrifft die Auswirkungen von Leseabtastabstandsschwankungen auf den Abbildungsmaßstab bei der Abbildung der auf der Maßverkörperung vorgesehenen Code-Sequenzen auf den Detektor. Diese Abtastabstandsschwankungen, d.h. Schwankungen in dem Abstand zwischen Maßverkörperung und Detektor, können dazu führen, dass die übertragenen Lichtmuster nicht mehr zu der Oberflächenstruktur des zugeordneten Detektors passen und der Code durch den Detektor nicht mehr erkannt werden kann.

Bei den vorstehenden Ausführungsbeispielen wurde durchgängig von Abbildungen mit einem Abbildungsmaßstab β = 1 ausgegangen. Bei einem positiven Abbildungsmaßstab β mit einem Wert kleiner 1 blieben die durch die einzelnen Zellen 31 a, 41a; 31 b, 41 b; 31 c, 41 c realisierten Bildbereiche voneinander separiert. In diesem Fall müsste das Detektorraster neben dem Raster der Code-Abtastung auch das Linsenraster als Überstruktur berücksichtigen. Bei einem positiven Abbildungsmaßstab β mit einem Wert größer 1 könnten demgegenüber sehr kleine Strukturen der Codespur entsprechend vergrößert werden.

Anstelle der in den obigen Ausführungsbeispielen jeweils verwendeten Linsenanordnung in Form zweier paralleler, in jeweils einer Ebene 30, 40 angeordneter Linsengruppen 3, 4 kann zur Erzeugung des gewünschten positiven Abbildungsmaßstabes auch eine in einer Ebene erstreckte Linsenanordnung in Form eines Arrays von Gradientenlinsen vorgesehen sein, wie beispielsweise aus Fotokopiergeräten bekannt. Die einzelnen Linsen werden dann beispielsweise in einem hexagonalen Raster angeordnet und ihre Länge wird derart gewählt, dass sie das abzubildende Objekt mit dem gewünschten Abbildungsmaßstab β, insbesondere dem Abbildungsmaßstab β = 1, abbilden. Bei derartigen Gradientenlinsenarrays ist das optische Übersprechen von einer Linse auf die nächste aufgrund einer Wellenleiterstruktur unterdrückt. Allerdings ist das Auflösungsvermögen verglichen mit einer in zwei parallelen Ebenen erstreckten Linsenanordnung geringer und die erforderliche Länge der einzelnen Linsen steht einer kompakten Bauform einer Positionsmesseinrichtung entgegen.

**Patentansprüche**

1. Abtasteinheit für eine Positionsmesseinrichtung zum optischen Abtasten einer Maßverkörperung (2) mit

   - einer Lichtquelle (11) zum Aussenden von Licht in Richtung auf eine Maßverkörperung (2),
   - einem Detektor (19) zum Empfangen des von der Maßverkörperung (2) modifizierten Lichtes und
   - einer vor dem Detektor (19) angeordneten, eine Mehrzahl optischer Linsen aufweisenden Linsenanordnung (3, 4) zur Erzeugung eines definierten Abbildes eines mittels des Lichtes abgetasteten Bereiches der Maßverkörperung (2) auf dem Detektor (19), wobei der Abbildungsmaßstab (β) der Linsenanordnung (3, 4) größer als Null und kleiner oder gleich Zwei ist und die Linsenanordnung (3, 4) zwei Gruppen (3; 4) von Linsen umfasst, die in jeweils einer von zwei parallel zueinander erstreckten Ebenen (30, 40) angeordnet sind, wobei die Ebenen (30, 40) derart ausgerichtet sind, dass das modifizierte Licht (L) die Ebenen (30, 40) schneidet und die Linsen der beiden Gruppen (3, 4) jeweils paarweise zu einer Zelle (31a, 41a; 31b, 41b; 31c, 41c) zusammengefasst sind und dass die Linsen (31 a, 41 a; 31 b, 41 b; 31 c, 41c) einer Zelle jeweils senkrecht zu den beiden Ebenen (30, 40) hintereinander angeordnet sind, so dass dass zumindest ein Teil der modifizierten Lichtstrahlen (L), die eine erste Linse (31 a, 31 b, 31 c) einer Zelle (31a, 41a; 31b, 41b; 31c, 41c) passiert haben, anschließend zu der zweiten Linse (41a, 41 b, 41c) der Zelle (31a, 41a; 31 b, 41b; 31c, 41 c) gelangen,
   **dadurch gekennzeichnet, dass**
   - der Betrag des Abbildungsmaßstabes (β1) der ersten Linse (31 a, 31 b, 31 c) der jeweiligen Zelle (31 a, 41 a; 31 b, 41 b; 31c, 41c) um soviel kleiner ist als der Betrag des Abbildungsmaßstabes (β2) der zweiten Linse (41a, 41b, 41c), dass die Lichtstrahlen (L) eines Lichtbündels (B), welches die erste Linse (31 a, 31 b, 31 c) einer Zelle (31a, 41 a; 31 b, 41 b; 31 c, 41 c) passiert hat, nicht zu einer zweiten Linse (41 a, 41 b, 41 c) einer anderen Zelle (31 a, 41 a; 31 b, 41 b; 31 c, 41 c) gelangen und
   - die Brennweiten (f1, f2) der Linsen (31, 32, 33; 41) der ersten Gruppe (3) und der zweiten Gruppe (4) unterschiedlich sind, wobei die Brennweite (f1) der Linsen (31 a, 31 b, 31 c), die das modifizierte Licht (L) zuerst passiert, vorzugsweise größer ist als die Brennweite (f2) der anderen Linsen (41a, 41b, 41c).

2. Abtasteinheit nach Anspruch 1, **dadurch gekennzeichnet, dass** der Abbildungsmaßstab (β) gleich Eins ist.

3. Abtasteinheit nach Anspruch 1, **dadurch gekennzeichnet, dass** sämtliche modifizierte Lichtstrahlen (L), die die erste Linse (31a, 31b, 31c) einer Zelle (31a, 41a; 31b, 41b; 31c, 41c) passiert haben, anschließend zu der zweiten Linse (41a, 41b, 41c) dieser Zelle (31a, 41 a; 31 b, 41 b; 31 c, 41 c) gelangen.

4. Abtasteinheit nach Anspruch 1, **dadurch gekennzeichnet, dass** die in einer Ebene (30) und dabei in einer Richtung (Q) senkrecht zur Messrichtung (M) nebeneinander angeordneten Linsen jeweils in Messrichtung (M) zueinander versetzt sind.

5. Abtasteinheit nach Anspruch 1, **dadurch gekennzeichnet, dass** für jede Zelle (31a, 41a; 31b, 41b; 31c, 41c) das Produkt der Abbildungsmaßstäbe (β1, β2) der beiden Linsen (31a, 41a; 31b, 41b; 31c, 41c) kleiner oder gleich Eins, insbesondere gleich Eins ist.

6. Abtasteinheit nach Anspruch 1, **dadurch gekennzeichnet, dass** für jede Zelle (31a, 41a; 31b, 41b; 31c, 41c) für den Betrag des Abbildungsmaßstabes (β1) der ersten Linse (31a, 41b, 31c), zu der das modifizierte Licht (L) gelangt und für den Betrag des Abbildungsmaßstabes ($\beta_2$) der zweiten Linse (41 a, 41 b, 41 c), zu der das modifizierte Licht (L) anschließend gelangt, gilt:

$$|β1|<< 1 \text{ und } |β2| >> 1$$

7. Abtasteinheit nach einem der Ansprüche 1 bis 6, **dadurch gekennzeichnet, dass** der Linsenanordnung (3, 4) eine Blendenstruktur zugeordnet ist.

8. Abtasteinheit nach Anspruch 7, **dadurch gekennzeichnet, dass** die Blendenstruktur in der Ebene (30) derjenigen Gruppe (3) von Linsen (31 a, 31 b, 31 c) angeordnet ist, die das modifizierte Licht (L) zuerst passiert.

9. Abtasteinheit nach Anspruch 8, **dadurch gekennzeichnet, dass** die Blendenstruktur zwischen den beiden Gruppen (3, 4) von Linsen (31a, 31 b, 31 c; 41 a, 41 b, 41 c) angeordnet ist.

10. Abtasteinheit nach Anspruch 10, **dadurch gekennzeichnet, dass** jeder Zelle (31 a, 41 a; 31 b, 41 b; 31 c, 41 c) eine Blende (5) der Blendenstruktur zugeordnet ist.

11. Positionsmesseinrichtung mit einer Maßverkörperung (2), die mindestens eine optisch abtastbare Spur (21, 22) aufweist, und mit einer Abtasteinheit (1) nach einem der vorhergehenden Ansprüche 1 - 10 zum Abtasten der Maßverkörperung (2).

12. Abtasteinheit für eine Positionsmesseinrichtung zum optischen Abtasten einer Maßverkörperung (2) mit

 - einer Lichtquelle (11) zum Aussenden von Licht in Richtung auf eine Maßverkörperung (2),
 - einem Detektor (19) zum Empfangen des von der Maßverkörperung (2) modifizierten Lichtes und
 - einer vor dem Detektor (19) angeordneten, eine Mehrzahl optischer Linsen aufweisenden Linsenanordnung (3, 4) zur Erzeugung eines definierten Abbildes eines mittels des Lichtes abgetasteten Bereiches der Maßverkörperung (2) auf dem Detektor (19), wobei der Abbildungsmaßstab (β) der Linsenanordnung (3, 4) größer als Null und kleiner oder gleich Zwei ist und die Linsenanordnung (3, 4) zwei Gruppen (3; 4) von Linsen umfasst, die in jeweils einer von zwei parallel zueinander erstreckten Ebenen (30, 40) angeordnet sind, wobei die Ebenen (30, 40) derart ausgerichtet sind, dass das modifizierte Licht (L) die Ebenen (30, 40) schneidet und die Linsen der beiden Gruppen (3, 4) jeweils paarweise zu einer Zelle (31a, 41a; 31b, 41b; 31c, 41c) zusammengefasst sind und dass die Linsen (31 a, 41 a; 31 b, 41 b; 31 c, 41 c) einer Zelle jeweils senkrecht zu den beiden Ebenen (30, 40) hintereinander angeordnet sind, so dass dass zumindest ein Teil der modifizierten Lichtstrahlen (L), die eine erste Linse (31 a, 31 b, 31 c) einer Zelle (31a, 41a; 31 b, 41b; 31c, 41c) passiert haben, anschließend zu der zweiten Linse (41a, 41b, 41c) der Zelle (31a, 41a; 31b, 41b; 31c, 41 c) gelangen, **dadurch gekennzeichnet, dass**
 - für jede Zelle (31a, 41a; 31b, 41b; 31c, 41c) der Betrag des Abbildungsmaßstabes (β1) der ersten Linse (31a, 41b, 31c), zu der das modifizierte Licht (L) gelangt, kleiner ist als der Betrag des Abbildungsmaßstabes ($\beta_2$) der zweiten Linse (41 a, 41 b, 41 c), zu der das modifizierte Licht (L) anschließend gelangt und
 - der Linsenanordnung (3, 4) eine Blendenstruktur zugeordnet ist, wobei das modifizierte Licht mittels der Blendenstruktur derart geführt wird, dass solche Lichtstrahlen (L), die die erste Linse (31a, 31b, 31c) einer Zelle (31 a, 41 a; 31 b, 41 b; 31 c, 41 c) passiert haben, nicht zu einer zweiten Linse (41a, 41 b, 41c) einer anderen Zelle (31a, 41a; 31 b, 41 b; 31 c, 41 c) gelangen.

13. Abtasteinheit nach Anspruch 12, **dadurch gekennzeichnet, dass** der Abbildungsmaßstab (β) gleich Eins ist.

14. Abtasteinheit nach Anspruch 12, **dadurch gekennzeichnet, dass** sämtliche modifizierte Lichtstrahlen (L), die die erste Linse (31 a, 31 b, 31c) einer Zelle (31a, 41a; 31b, 41b; 31c, 41c) passiert haben, anschließend zu der zweiten Linse (41a, 41b, 41c) dieser Zelle (31a, 41 a; 31 b, 41 b; 31 c, 41 c) gelangen.

**15.** Abtasteinheit nach Anspruch 12, **dadurch gekennzeichnet, dass** die in einer Ebene (30) und dabei in einer Richtung (Q) senkrecht zur Messrichtung (M) nebeneinander angeordneten Linsen jeweils in Messrichtung (M) zueinander versetzt sind.

**16.** Abtasteinheit nach Anspruch 12, **dadurch gekennzeichnet, dass** für jede Zelle (31a, 41a; 31b, 41b; 31c, 41c) das Produkt der Abbildungsmaßstäbe ($\beta$1, $\beta$2) der beiden Linsen (31 a, 41a; 31b, 41b; 31 c, 41 c) kleiner oder gleich Eins, insbesondere gleich Eins ist.

**17.** Abtasteinheit nach Anspruch 16, **dadurch gekennzeichnet, dass** für jede Zelle (31a, 41a; 31b, 41b; 31c, 41c) für den Betrag des Abbildungsmaßstabes ($\beta$1) der ersten Linse (31 a, 41 b, 31 c), zu der das modifizierte Licht (L) gelangt und für den Betrag des Abbildungsmaßstabes ($\beta_2$) der zweiten Linse (41 a, 41 b, 41 c), zu der das modifizierte Licht (L) anschließend gelangt, gilt:

$$|\beta1| << 1 \text{ und } |\beta2| >> 1$$

**18.** Abtasteinheit nach einem der Ansprüche 12 bis 17, **dadurch gekennzeichnet, dass** die Brennweiten (f1, f2) der Linsen (31, 32, 33; 41) der ersten Gruppe (3) und der zweiten Gruppe (4) unterschiedlich sind, wobei die Brennweite (f1) der Linsen (31a, 31 b, 31 c), die das modifizierte Licht (L) zuerst passiert, vorzugsweise größer ist als die Brennweite (f2) der anderen Linsen (41 a, 41 b, 41 c).

**19.** Abtasteinheit nach Anspruch 12, **dadurch gekennzeichnet, dass** die Blendenstruktur in der Ebene (30) derjenigen Gruppe (3) von Linsen (31 a, 31 b, 31 c) angeordnet ist, die das modifizierte Licht (L) zuerst passiert.

**20.** Abtasteinheit nach Anspruch 12, **dadurch gekennzeichnet, dass** die Blendenstruktur zwischen den beiden Gruppen (3, 4) von Linsen (31a, 31 b, 31 c; 41 a, 41 b, 41c) angeordnet ist.

**21.** Abtasteinheit nach Anspruch 20, **dadurch gekennzeichnet, dass** jeder Zelle (31 a, 41 a; 31 b, 41 b; 31 c, 41 c) eine Blende (5) der Blendenstruktur zugeordnet ist.

**22.** Positionsmesseinrichtung mit einer Maßverkörperung (2), die mindestens eine optisch abtastbare Spur (21, 22) aufweist, und mit einer Abtasteinheit (1) nach einem der vorhergehenden Ansprüche 12 - 21 zum Abtasten der Maßverkörperung (2).


**Claims**

**1.** Scanning unit for a position measuring device for optically scanning a material measure (2) comprising

- a light source (11) for emitting light in the direction of a material measure (2),
- a detector (19) for receiving the light modified by the material measure (2), and
- a lens arrangement (3, 4) arranged upstream of the detector (19) and having a plurality of optical lenses and serving for generating a defined image of a region of the material measure (2) that is scanned by means of the light on the detector (19), wherein the imagine scale ($\beta$) of the lens arrangement (3, 4) is greater than zero and less than or equal to two and the lens arrangement (3, 4) comprises two groups (3; 4) of lenses which are arranged in respectively one of two planes (30, 40) extended parallel to one another, wherein the planes (30, 40) are aligned in such a way that the modified light (L) intersects the planes (30, 40) and the lenses of the two groups (3, 4) are respectively combined in pairs to form a cell (31a, 41a; 31b, 41b; 31c, 41c) and that the lenses (31a, 41a; 31b, 41b; 31c, 41c) of a cell are arranged one behind another in each case perpendicularly to the two planes (30, 40), such that at least one portion of the modified light rays (L) which have passed through a first lens (31a, 31b, 31c) of a cell (31a, 41a; 31b, 41b; 31c, 41c) subsequently pass to the second lens (41a, 41b, 41c) of the cell (31a, 41a; 31b, 41b; 31c, 41c), **characterized in that**
- the absolute value of the imaging scale ($\beta$1) of the first lens (31a, 31b, 31c) of the respective cell (31a, 41a; 31b, 41b; 31c, 41c) is less than the absolute value of the imaging scale ($\beta$2) of the second lens (41a, 41b, 41c) by an amount such that the light rays (L) of a light beam (B) which has passed through the first lens (31a, 31b, 31c) of one cell (31a, 41a; 31b, 41b; 31c, 41c) do not pass to a second lens (41a, 41b, 41c) of another cell (31a, 41a; 31b, 41b; 31c, 41c), and

- the focal lengths (f1, f2) of the lenses (31, 32, 33; 41) of the first group (3) and of the second group (4) are different, wherein the focal length (f1) of the lenses (31a, 31b, 31c) through which the modified light (L) passes first is preferably greater than the focal length (f2) of the other lenses (41a, 41b, 41c).

**2.** Scanning unit according to Claim 1, **characterized in that** the imaging scale (β) is equal to one.

**3.** Scanning unit according to Claim 1, **characterized in that** all modified light rays (L) which have passed through the first lens (31a, 31b, 31c) of a cell (31a, 41a; 31b, 41b; 31c, 41c) subsequently pass to the second lens (41a, 41b, 41c) of this cell (31a, 41a; 31b, 41b; 31c, 41c).

**4.** Scanning unit according to Claim 1, **characterized in that** the lenses arranged alongside one another in a plane (30) and in this case in a direction (Q) perpendicular to the measuring direction (M) are offset with respect to one another in each case in the measuring direction (M).

**5.** Scanning unit according to Claim 1, **characterized in that** for each cell (31a, 41a; 31b, 41b; 31c, 41c) the product of the imaging scales (β1, β2) of the two lenses (31a, 41a; 31b, 41b; 31c, 41c) is less than or equal to one, in particular equal to one.

**6.** Scanning unit according to Claim 1, **characterized in that** for each cell (31a, 41a; 31b, 41b; 31c, 41c) the following holds true for the absolute value of the imaging scale (β1) of the first lens (31a, 31b, 31c) to which the modified light (L) passes, and for the absolute value of the imaging scale (β2) of the second lens (41a, 41b, 41c) to which the modified light (L) subsequently passes:

$$|\beta 1| \ll 1 \text{ and } |\beta 2| \gg 1$$

**7.** Scanning unit according to any of Claims 1 to 6, **characterized in that** a diaphragm structure is assigned to the lens arrangement (3, 4).

**8.** Scanning unit according to Claim 7, **characterized in that** the diaphragm structure is arranged in the plane (30) of that group (3) of lenses (31a, 31b, 31c) through which the modified light (L) passes first.

**9.** Scanning unit according to Claim 8, **characterized in that** the diaphragm structure is arranged between the two groups (3, 4) of lenses (31a, 31b, 31c; 41a, 41b, 41c).

**10.** Scanning unit according to Claim 10, **characterized in that** a diaphragm (5) of the diaphragm structure is assigned to each cell (31a, 41a; 31b, 41b; 31c, 41c).

**11.** Position measuring device comprising a material measure (2) having at least one optically scannable track (21, 22) and comprising a scanning unit (1) according to any of the preceding Claims 1-10 for scanning the material measure (2).

**12.** Scanning unit for a position measuring device for optically scanning a material measure (2) comprising

- a light source (11) for emitting light in the direction of a material measure (2),
- a detector (19) for receiving the light modified by the material measure (2), and
- a lens arrangement (3, 4) arranged upstream of the detector (19) and having a plurality of optical lenses and serving for generating a defined image of a region of the material measure (2) that is scanned by means of the light on the detector (19), wherein the imaging scale (β) of the lens arrangement (3, 4) is greater than zero and less than or equal to two and the lens arrangement (3, 4) comprises two groups (3; 4) of lenses which are arranged in respectively one of two planes (30, 40) extended parallel to one another, wherein the planes (30, 40) are aligned in such a way that the modified light (L) intersects the planes (30, 40) and the lenses of the two groups (3, 4) are respectively combined in pairs to form a cell (31a, 41a; 31b, 41b; 31c, 41c) and that the lenses (31a, 41a; 31b, 41b; 31c, 41c) of a cell are arranged one behind another in each case perpendicularly to the two planes (30, 40), such that at least one portion of the modified light rays (L) which have passed through a first lens (31a, 31b, 31c) of a cell (31a, 41a; 31b, 41b; 31c, 41c) subsequently pass to the second lens (41a, 41b, 41c) of the cell (31a, 41a; 31b, 41b; 31c, 41c), **characterized in that**

- for each cell (31a, 41a; 31b, 41b; 31c, 41c) the absolute value of the imaging scale ($\beta$1) of the first lens (31a, 31b, 31c) to which the modified light (L) passes is less than the absolute value of the imaging scale ($\beta$2) of the second lens (41a, 41b, 41c) to which the modified light (L) subsequently passes, and
- a diaphragm structure is assigned to the lens arrangement (3, 4), wherein the modified light is guided by means of the diaphragm structure in such a way that such light rays (L) which have passed through the first lens (31a, 31b, 31c) of one cell (31a, 41a; 31b, 41b; 31c, 41c) do not pass to a second lens (41a, 41b, 41c) of another cell (31a, 41a; 31b, 41b; 31c, 41c).

13. Scanning unit according to Claim 12, **characterized in that** the imaging scale ($\beta$) is equal to one.

14. Scanning unit according to Claim 12, **characterized in that** all modified light rays (L) which have passed through the first lens (31a, 31b, 31c) of a cell (31a, 41a; 31b, 41b; 31c, 41c) subsequently pass to the second lens (41a, 41b, 41c) of this cell (31a, 41a; 31b, 41b; 31c, 41c).

15. Scanning unit according to Claim 12, **characterized in that** the lenses arranged alongside one another in a plane (30) and in this case in a direction (Q) perpendicular to the measuring direction (M) are offset with respect to one another in each case in the measuring direction (M).

16. Scanning unit according to Claim 12, **characterized in that** for each cell (31a, 41a; 31b, 41b; 31c, 41c) the product of the imaging scales ($\beta$1, $\beta$2) of the two lenses (31a, 41a; 31b, 41b; 31c, 41c) is less than or equal to one, in particular equal to one.

17. Scanning unit according to Claim 16, **characterized in that** for each cell (31a, 41a; 31b, 41b; 31c, 41c) the following holds true for the absolute value of the imaging scale ($\beta$1) of the first lens (31a, 31b, 31c) to which the modified light (L) passes, and for the absolute value of the imaging scale ($\beta$2) of the second lens (41a, 41b, 41c) to which the modified light (L) subsequently passes:

$$|\beta1| \ll 1 \text{ and } |\beta2| \gg 1$$

18. Scanning unit according to any of Claims 12 to 17, **characterized in that** the focal lengths (f1, f2) of the lenses (31, 32, 33; 41) of the first group (3) and of the second group (4) are different, wherein the focal length (f1) of the lens (31a, 31b, 31c) through which the modified light (L) passes first is preferably greater than the focal length (f2) of the other lenses (41a, 41b, 41c).

19. Scanning unit according to Claim 12, **characterized in that** the diaphragm structure is arranged in the plane (30) of that group (3) of lenses (31a, 31b, 31c) through which the modified light (L) passes first.

20. Scanning unit according to Claim 12, **characterized in that** the diaphragm structure is arranged between the two groups (3, 4) of lenses (31a, 31b, 31c; 41a, 41b, 41c).

21. Scanning unit according to Claim 20, **characterized in that** a diaphragm (5) of the diaphragm structure is assigned to each cell (31a, 41a; 31b, 41b; 31c, 41c).

22. Position measuring device comprising a material measure (2) having at least one optically scannable track (21, 22) and comprising a scanning unit (1) according to any of the preceding Claims 12-21 for scanning the material measure (2).

**Revendications**

1. Unité de palpage pour dispositif de mesure de position servant à palper optiquement un corps (2) à mesurer, et présentant
une source de lumière (11) qui émet de la lumière en direction d'un corps (2) à mesurer,

un détecteur (19) qui reçoit la lumière modifiée par le corps (2) à mesurer,
un ensemble (3, 4) de lentilles présentant plusieurs lentilles optiques et disposées en avant du détecteur (19) pour former sur le détecteur (19) une image définie d'une partie du corps (2) à mesurer palpée au moyen de la lumière, l'échelle de représentation (β) de l'ensemble (3, 4) de lentilles étant supérieure à zéro et inférieure ou égale à deux et l'ensemble (3, 4) de lentilles comportant deux groupes (3; 4) de lentilles qui sont disposées dans l'un parmi deux plans (30, 40) qui s'étendent parallèlement l'un à l'autre, les plans (30, 40) étant orientés de telle sorte que la lumière (L) modifiée coupe les plans (30, 40), les lentilles des deux groupes (3, 4) étant rassemblées en paires pour former une cellule (31a, 41a; 31b, 41b; 31c, 41c) et les lentilles (31a, 41a; 31b, 41b; 31c, 41c) d'une cellule étant toutes disposées les unes derrière les autres perpendiculairement aux deux plans (30, 40) de telle sorte qu'au moins une partie du rayon lumineux (L) modifié qui a traversé une première lentille (31a, 31b, 31c) d'une cellule (31a, 41a; 31b, 41b; 31c, 41c) aboutisse ensuite sur la deuxième lentille (41a, 41b, 41c) de la cellule (31a, 41a; 31b, 41b; 31c, 41c), **caractérisée en ce que**
le niveau de l'échelle de représentation (β1) de la première lentille (31a, 31b, 31c) de chaque cellule (31a, 41a; 31b, 41b; 31c, 41c) est plus petit que le niveau de l'échelle de représentation (β2) de la deuxième lentille (41a, 41b, 41c) de telle sorte que les rayons lumineux (L) d'un faisceau lumineux (B) qui a traversé la première lentille (31a, 31b, 31c) d'une cellule (31a, 41a; 31b, 41b; 31c, 41c) n'aboutisse pas sur une deuxième lentille (41a, 41b, 41c) d'une autre cellule (31a, 41a; 31b, 41b; 31c, 41c) et
**en ce que** les distances focales (f1, f2) des lentilles (31, 32, 33; 41) du premier groupe (3) et du deuxième groupe (4) sont différentes, la distance focale (f1) de la lentille (31a, 31b, 31c) que la lumière modifiée (L) a traversé en premier lieu étant de préférence plus grande que la longueur focale (f2) de l'autre lentille (41a, 41b, 41c).

2. Unité de palpage selon la revendication 1, **caractérisée en ce que** l'échelle de représentation (β) est égale à un.

3. Unité de palpage selon la revendication 1, **caractérisée en ce que** tous les rayons lumineux modifiés (L) qui ont traversé la première lentille (31a, 31b, 31c) d'une cellule (31a, 41a; 31b, 41b; 31c, 41c) aboutissent ensuite sur la deuxième lentille (41a, 41b, 41c) de cette cellule (31a, 41a; 31b, 41b; 31c, 41c).

4. Unité de palpage selon la revendication 1, **caractérisée en ce que** les lentilles disposées dans un plan (30) et dans une direction (Q) perpendiculaire à la direction de mesure (M) sont décalées l'une par rapport à l'autre dans la direction de mesure (M).

5. Unité de palpage selon la revendication 1, **caractérisée en ce que** pour chaque cellule (31a, 41a; 31b, 41b; 31c, 41c), le produit de l'échelle de représentation (β1, β2) des deux lentilles (31a, 41a; 31b, 41b; 31c, 41c) est inférieur ou égal à un et en particulier égal à un.

6. Unité de palpage selon la revendication 1, **caractérisée en ce que** pour chaque cellule (31a, 41a; 31b, 41b; 31c, 41c), pour le niveau de l'échelle de représentation (β1) de la première lentille (31a, 31b, 31c) sur laquelle la lumière modifiée (L) a abouti et pour le niveau de l'échelle de représentation (β2) de la deuxième lentille (41a, 41b, 41c) sur laquelle la lumière modifiée (L) aboutit ensuite, on a : $|\beta1| << 1$ et $|\beta2| >> 1$.

7. Unité de palpage selon l'une des revendications 1 à 6, **caractérisée en ce qu'**une structure d'écran est associée à l'ensemble (3, 4) de lentilles.

8. Unité de palpage selon la revendication 7, **caractérisée en ce que** la structure d'écran est disposée dans le plan (30) du groupe (3) de lentilles (31a, 31b, 31c) que la lumière modifiée (L) a traversé en premier lieu.

9. Unité de palpage selon la revendication 8, **caractérisée en ce que** la structure d'écran est disposée entre les deux groupes (3, 4) de lentilles (31a, 41a; 31b, 41b; 31c, 41c).

10. Unité de palpage selon la revendication 10, **caractérisée en ce qu'**un écran (5) de la structure d'écran est associé à chaque cellule (31a, 41a; 31b, 41b; 31c, 41c).

11. Dispositif de mesure de position doté d'un corps (2) à mesurer qui présente au moins une trace (21, 22) optiquement palpable et une unité de palpage (1) selon l'une des revendications 1 à 10 qui précèdent, pour le palpage du corps (2) à mesurer.

12. Unité de palpage pour un dispositif de mesure de position palpant optiquement un corps (2) à mesurer et présentant :

une source de lumière (11) qui émet de la lumière en direction d'un corps (2) à mesurer,

un détecteur (19) qui reçoit la lumière modifiée par le corps (2) à mesurer,

un ensemble (3, 4) de lentilles présentant plusieurs lentilles optiques et disposées en avant du détecteur (19) pour former sur le détecteur (19) une image définie d'une partie du corps (2) à mesurer palpée au moyen de la lumière,

l'échelle de représentation (β) de l'ensemble (3, 4) de lentilles étant supérieure à zéro et inférieure ou égale à deux et l'ensemble (3, 4) de lentilles comportant deux groupes (3; 4) de lentilles qui sont disposées dans l'un parmi deux plans (30, 40) qui s'étendent parallèlement l'un à l'autre, les plans (30, 40) étant orientés de telle sorte que la lumière (L) modifiée coupe les plans (30, 40), les lentilles des deux groupes (3, 4) étant rassemblées en paires pour former une cellule (31a, 41a; 31b, 41b; 31c, 41c) et les lentilles (31a, 41a; 31b, 41b; 31c, 41c) d'une cellule étant toutes disposées les unes derrière les autres perpendiculairement aux deux plans (30, 40) de telle sorte qu'au moins une partie du rayon lumineux (L) modifié qui a traversé une première lentille (31a, 31b, 31c) d'une cellule (31a, 41a; 31b, 41b; 31c, 41c) aboutisse ensuite sur la deuxième lentille (41a, 41b, 41c) de la cellule (31a, 41a; 31b, 41b; 31c, 41c), **caractérisé en ce que**

pour chaque cellule (31a, 41a; 31b, 41b; 31c, 41c), le niveau de l'échelle de représentation (β1) de la première lentille (31a, 31b, 31c) sur laquelle la lumière modifiée (L) aboutit est inférieur au niveau de l'échelle de représentation (β2) de la deuxième lentille (41a, 41b, 41c) sur laquelle la lumière modifiée (L) aboutit ensuite et **en ce qu'**à l'ensemble de lentilles (3, 4) est associée une structure d'écran, la lumière modifiée étant guidée au moyen de la structure d'écran de telle sorte que les rayons lumineux (L) qui ont traversé la première lentille (31a, 31b, 31c) d'une cellule (31a, 41a; 31b, 41b; 31c, 41c) n'aboutissent pas sur une deuxième lentille (41a, 41b, 41c) d'une autre cellule (31a, 41a; 31b, 41b; 31c, 41c).

13. Unité de palpage selon la revendication 12, **caractérisée en ce que** l'échelle de représentation (β) est égale à un.

14. Unité de palpage selon la revendication 12, **caractérisée en ce que** tous les rayons lumineux modifiés (L) qui ont traversé la première lentille (31a, 31b, 31c) d'une cellule (31a, 41a; 31b, 41b; 31c, 41c) aboutissent ensuite sur la deuxième lentille (41a, 41b, 41c) de cette cellule (31a, 41a; 31b, 41b; 31c, 41c).

15. Unité de palpage selon la revendication 12, **caractérisée en ce que** les lentilles disposées dans un plan (30) et dans une direction (Q) perpendiculaire à la direction de mesure (M) sont décalées l'une par rapport à l'autre dans la direction de mesure (M).

16. Unité de palpage selon la revendication 12, **caractérisée en ce que** pour chaque cellule (31a, 41a; 31b, 41b; 31c, 41c), le produit de l'échelle de représentation (β1, β2) des deux lentilles (31a, 41a; 31b, 41b; 31c, 41c) est inférieur ou égal à un et en particulier égal à un.

17. Unité de palpage selon la revendication 16, **caractérisée en ce que** pour chaque cellule (31a, 41a; 31b, 41b; 31c, 41c), pour le niveau de l'échelle de représentation (β1) de la première lentille (31a, 31b, 31c) sur laquelle la lumière modifiée (L) a abouti et pour le niveau de l'échelle de représentation (β2) de la deuxième lentille (41a, 41b, 41c) sur laquelle la lumière modifiée (L) aboutit ensuite, on a : $|\beta 1| << 1$ et $|\beta 2| >> 1$.

18. Unité de palpage selon l'une des revendications 12 à 17, **caractérisée en ce que** les distances focales (f1, f2) des lentilles (31, 32, 33; 41) du premier groupe (3) et du deuxième groupe (4) sont différentes, la distance focale (f1) de la lentille (31a, 31b, 31c) que la lumière modifiée (L) a traversé en premier lieu étant de préférence plus grande que la longueur focale (f2) de l'autre lentille (41a, 41b, 41c).

19. Unité de palpage selon la revendication 12, **caractérisée en ce que** la structure d'écran est disposée dans le plan (30) du groupe (3) de lentilles (31a, 31b, 31c) que la lumière modifiée (L) a traversé en premier lieu.

20. Unité de palpage selon la revendication 12, **caractérisée en ce que** la structure d'écran est disposée entre les deux groupes (3, 4) de lentilles (31a, 41a; 31b, 41b; 31c, 41c).

21. Unité de palpage selon la revendication 20, **caractérisée en ce qu'**un écran (5) de la structure d'écran est associé à chaque cellule (31a, 41a; 31b, 41b; 31c, 41c).

22. Dispositif de mesure de position doté d'un corps (2) à mesurer qui présente au moins une trace (21, 22) opti.quement palpable et une unité de palpage (1) selon l'une des revendications 12 à 21 qui précèdent, pour le palpage du corps (2) à mesurer.

Fig. 1

EP 1 467 185 B1

# FIG 2

FIG 3

# FIG 4

# FIG 5

**EP 1 467 185 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1009936 A1
- WO 02084223 A1
- DE 10022619 A1